# EUROPÄISCHE PATENTSCHRIFT

(11) **EP 0 604 829 B1**
(45) Veröffentlichungstag und Bekanntmachung des Hinweises auf die Patenterteilung: **22.01.1997**
(21) Anmeldenummer: 93120187.5
(22) Anmeldetag: 15.12.1993
(51) Int. Cl.: C04B 35/48, C03B 5/43

(54) **Zirkonsilikatstein und Verfahren zu seiner Herstellung**
Zircon brick and process for its production
Pierre en zircone et procédé pour sa fabrication

(30) Priorität: 22.12.1992 DE 4243538
(43) Veröffentlichungstag der Anmeldung: 06.07.1994
(73) Patentinhaber: DYKO INDUSTRIEKERAMIK GmbH, D-40549 Düsseldorf (DE)
(72) Erfinder: Goerenz, Edmund, D-52477 Alsdorf (DE); Janssen, Reinhold, D-47918 Tönisvorst (DE); Wächter, Klaus, D-41564 Kaarst (DE)
(74) Vertreter: Rehberg, Elmar, Dipl.-Ing.

(56) Entgegenhaltungen:
- WO-A-91/03439
- NL-A- 135 737
- Holleman-Wiberg: Lehrbuch der anorganischen Chemie, 91-100. Auflage, Nils Wiberg, Walter de Gruyter (1985), Seiten 646-647.

## Beschreibung

Die Erfindung bezieht sich auf einen Zirkonsilikatstein mit einer Rohdichte von zwischen 4,2 g/cm³ und 4,5 g/cm³ aus einem feinkörnigen ZrSiO₄-Ausgangspulver, das 62 Gew.-% bis 66 Gew.-% ZrO₂, 33 Gew.-% bis 34 Gew.-% SiO₂ und Verunreinigungen in Form von Al₂O₃, TiO₂ und Fe₂O₃ in möglichst geringen Anteilen enthält. Solche Zirkonsilikatsteine werden - vorzugsweise isostatisch gepresst und dicht gesintert - für Glasschmelzanlagen eingesetzt, insbesondere für solche, in denen borhaltige Gläser erschmolzen werden.

Ein Zirkonsilikatstein der eingangs beschriebenen Art ist aus Schulle, "Feuerfeste Werkstoffe", 1. Auflage 1990, Seiten 220-224 bekannt. Für die Herstellung von gesinterten zirkoniumhaltigen Erzeugnissen wird von natürlich vorkommendem Zirkoniumsilikat ausgegangen. Es besteht in seiner chemischen Zusammensetzung theoretisch aus zwei Dritteln Zirkoniumdioxid und einem Drittel Siliziumdioxid. Bei hohen einwirkenden Temperaturen in der Größenordnung von 1700°C kommt es zu einer Zersetzung und zu deutlichen Eigenschaftsveränderungen. Titandioxid fördert diese Zersetzung. Bei gleichzeitiger Anwesenheit von Al₂O₃ stellt sich diese Zersetzung auch bereits bei tieferen Temperaturen in der Größenordnung von 1500°C ein. Zirkoniumsilikaterzeugnisse werden durch Schlickergießen, Stampfen, aber auch durch isostatisches Pressen geformt, wobei ein feinkörniges Ausgangspulver verarbeitet wird. Eine zusätzliche Bindephase ist bei diesen Erzeugnissen meist nicht notwendig. Die Verunreinigungen insbesondere von Al₂O₃, TiO₂ und Fe₂O₃ sollen in möglichst geringen Anteilen gehalten werden, wobei das Al₂O₃ in Prozentanteilen von 0,5 bis 1,0 %, das TiO₂ < 0,1 % und das Fe₂O₃ < 0,5 % enthalten sein sollen. Damit sind Zirkonsilikatsteine herstellbar, die eine Rohdichte im Bereich von 4,2 bis etwa 4,5 g/cm³ aufweisen. Insbesondere in Glaswannen, die mit solchen Zirkonsilikatsteinen zugestellt sind und bei denen Temperaturen bis zu 1700°C vorliegen, erfüllen diese Steine infolge der auftretenen Dissoziierung ihre Eigenschaften nur ungenügend. In Kontakt mit dem flüssigen Glas der Schmelze kommt es zu Korrosionserscheinungen. Das Siliziumdioxid wird ausgewaschen und mitgenommen, so daß ein Abtrag an den Steinen entsteht. Durch Infiltration von Al₂O₃-Anteilen aus der Glasschmelze in den Zirkonsilikatstein entstehen Reaktionen mit dem SiO₂. Die Folge davon ist eine Mullitbildung, welche mit einer Verringerung der Dichte und damit einer Volumenexpansion verbunden ist. Letztlich ist damit die Einsatzdauer solcher Zirkonsilikatsteine begrenzt.

Aus Verworner Berndt, 1. Auflage 1977 "Feuerfeste Baustoffe für Glasschmelzanlagen", Seiten 96-100 sind zirkonhaltige Erzeugnisse bekannt und beschrieben, bei denen Zirkon sehr hoher Reinheit eingesetzt wird. Auch die thermische Dissoziation ist hier beschrieben, und es wird Wert auf die Verwendung feinkörniger Komponenten gelegt. Die Anteile an Verunreinigungen sind ähnlich gering festgelegt.

Aus dem Shinagawa tech. Report Nr. 25 (1981), Seiten 37-44 ist es bekannt, Titandioxid nicht nur in Form der natürlichen Verunrelnigung des feinkörnigen Ausgangspulvers mit einem Anteil < 0,1 % zuzulassen, sondern TiO₂ in vergleichsweise höheren Anteilen als Sinterhilfsmittel dem feinkörnigen Ausgangspulver hinzuzufügen. Damit sind Zirkonsilikatsteine etwas höherer Dichte und geringerer Porosität herstellbar, die einen größeren Widerstand gegen aus der Glasschmelze eindiffundierendes Al₂O₃ besitzen. Es wird über verschiedene Modellversuche berichtet, bei denen das feinkörnige Ausgangspulver in unterschiedlichen Korngrößenbereichen, beispielsweise zwischen 300 und 2 µ oder zwischen 10 und 2 µ eingesetzt werden. Hinsichtlich der Korrosionsbeständigkeit wird einem Korngrößenbereich zwischen 44 und 2 µ der Vorzug gegeben.

Aus der WO-A-91/03439 ist eine Zusammensetzung eines Ausgangspulvers für einen Zirkonsilikatstein bekannt, bei dein mindestens 50 Gew.-% ZrSiO₄ eingesetzt werden. Weiterhin wird mindestens 1 Gew.-% Zirkonoxid in feinkörniger Form gleichmäßig verteilt in dem Ausgangspulver verwendet. Zur Verbesserung des Kornwachstums des Zirkons wird Titandioxid in einer Größenordnung von etwa 2 Gew.-% oder weniger dem Gemenge hinzugefügt. Dies zielt darauf ab, einen verbessert temperaturwechselbeständigen Stein zu erzeugen, der in Glasschmelzanlagen eingesetzt wird.

Der Erfindung liegt die Aufgabe zugrunde, einen Zirkonsilikatstein sowie ein Verfahren zu seiner Herstellung aufzuzeigen, der eine hohe Korrosionsbeständigkeit beim Einsatz in Glasschmelzanlagen für Borsilikatgläser aufweist und bei dem das beschriebene Zersetzungsverhalten bei erhöhten Temperaturen reduziert ist.

Erfindungsgemäß wird dies bei einem Zirkonsilikatstein dadurch erreicht, daß er eine oder mehrere Phosphorverbindungen in einer Menge von 0,1 und 5 Gew.-% enthält. Dabei können Phosphorverbindungen in solchen Anteilen eingesetzt werden, daß der gebrannte Zirkonsilikatstein vorzugsweise nicht mehr als ein Gewichts-% P₂O₅ enthält.

Die Hinzufügung von reaktionsfähigem Phosphor in der Phosphorverbindung erbringt zwei Wirkmechanismen. Zum einen wird damit der Al₂O₃-Anteil gebunden, der als Verunreinigung in dem feinkörnigen Ausgangspulver enthalten ist. Zum anderen tritt eine Bindungswirkung zu dem Al₂O₃-Anteil der einfiltrierenden Glasschmelze statt. In beiden Fällen findet eine Bindung zu AlPO₄ statt, und als Folge wird die Dissoziation reduziert. Außerdem ist AlPO₄ eine hochfeuerfeste Verbindung, die Beanspruchungstemperaturen bis über 2000°C erträgt. Der neue Zirkonsilikatstein weist eine wesentlich verbesserte Gebrauchsdauer auf. Er besitzt in dem üblicherweise vorliegenden Temperaturbereich eine vergleichsweise geringere Volumenänderung. Er läßt auch die Erreichung erhöhter Dichten zu, so daß auch von dieser Seite dem Einfiltrierungsprozeß entgegengearbeitet wird. Besonders überraschende Eigenschaften und Ergebnisse bei solchen Zirkonsilikatsteinen lassen sich dann erzielen, wenn das als Rohstoff eingesetzte Zirkonsilikat Verunreinigungen von maximal 0,3 Gew.-% Al₂O₃, 0,2 Gew.-% TiO₂ und maximal 0,1 Gew.-% Fe₂O₃ enthält.

Besonders sinnvoll ist es in diesem Zusammenhang, das Ausgangspulver in einer Korngröße von maximal 20 µ, besser maximal 10 µ, einzusetzen. Man erreicht hierdurch nicht nur eine vergleichsweise Erhöhung der Rohdichte, sondern der reaktionsfähige Phosphoranteil wird im Stein auch feiner verteilt, so daß er seine Funktion der Bindung des Al₂O₃ besser erfüllen kann.

Obwohl die Verunreinigungen im Ausgangspulver bekanntermaßen Maximalgrenzen nicht überschreiten sollen, ist es dennoch im vorliegenden Zusammenhang sinnvoll, daß der Zirkonsilikatstein TiO₂ als Sinterhilfsmittel in einer Menge von maximal 5 Gew.-% - vorzugsweise maximal 1 Gew.-% - enthält. Bis zu Gehalten von maximal 1 % wird die Dissoziation nicht nennenswert verschlechtert, jedoch ergibt sich vorteilhaft die Möglichkeit, zu vergleichsweise dichten Steinen zu gelangen.

Als Phosphorverbindungen können Phosphorsäure, Salze und Ester der Phosphorsäure, Phosphonsäure (= Phosphorige Säure), Phosphite, Hydrogenphosphite, Phosphonsäureester, Hypophosphorige Säure (=Phosphinsäure), Salze und Ester der Hypophosphorigen Säure, Diphosphorsäure, Diphosphorlge Säre, Salze der Diphosphorigen Säure, Polyphosphorsäuren, Metaphosphorsäure und/oder Salze der Metaphosphorsäure eingesetzt werden. Diese genannten Phosphorverbindungen können einzeln oder in Kombination eingesetzt werden. Bereits bei alleiniger Verwendung von Phosphorsäure lassen sich akzeptable Ergebnisse erzielen.

Ein solcher Zirkonsilikatstein weist eine Rohdichte größer/gleich 4,30 g/cm³ auf. Eine offene Porosität von < 0,5 % ist erreichbar.

Ein Verfahren zur Herstellung eines solchen Zirkonsilikatsteines sieht vor, daß das feinkörnige Ausgangspulver geformt und gebrannt wird, wobei dein Ausgangspulver eine Phosphorverbindung in einer Menge von 0,1 bis 5 Gewichts-% hinzugefügt wird. Es hat sich als zweckmäßig erwiesen, Phosphorverbindungen bis hin zu 1 Gewichts-% P₂O₅ im Endprodukt anzuwenden. Die Ausgangskomponenten werden in einem Naßhomogenisierungsverfahren aufgeschlickert, getrocknet, gegebenenfalls sprühgetrocknet und vorzugsweise mit einem Preßdruck oberhalb 1000 bar isostatisch zu Formlingen verpreßt. Nach einem Brennvorgang bei Temperaturen im Bereich zwischen 1500 und 1680°C ergeben sich die gewünschten Eigenschaften an den Zirkonsilikatsteinen.

Dem feinkörnigen Ausgangspulver wird vorzugsweise Titandioxid als Sinterhilfsmittel in einer Menge von 0,1 und 5 Gewichts-% hinzugefügt. Hiermit wird der Sintervorgang begünstigt, und es entsteht ein besonders dichtes Gefüge.

Auch auf die Verwendung der Ausgangspulver in möglichst feinkörnigem Zustand kommt es an. Im allgemeinen empfiehlt sich eine Mahlfeinheit von maximal 20 µ, vorzugsweise maximal 10 µ.

Das Titandioxid kann in technischer Reinheit in Form eines Rutil-/oder Anataspigmentes eingesetzt werden. Dies geschieht vorzugsweise mit einer maximalen Korngröße von 5 µ, insbesondere maximal 1 µ.

Zur Herstellung von Zirkonsilikatsteinen mit besonders langer Gebrauchsdauer empfiehlt sich der Einsatz eines feinkörnigen Ausgangspulvers aus 98 % Zirkoniumsilikat, 1,5 % Titandioxid und 0,5 % einer Phosphorverbindung. Diese Anteile können innerhalb gewisser Grenzen leicht variiert werden.

Die Erfindung wird nochmals anhand folgender Zusammensetzungsbeispiele erläutert:

Bei Verwendung eines Ausgangspulvers mit einer Feinkörnigkeit von unter 40 µ und einem Anteil von 98 % ZrSiO₄, wie es im Stand der Technik bekannt ist, ergibt sich durch Hinzufügung von 1,5 % TiO₂ und ohne die Verwendung einer Phosphorverbindung eine Rohdichte von etwa 4,2 g/cm³, verbunden mit einer offenen Porosität von 2,3 %. Nach einem einstündigen Einsatz bei 1700°C ist etwa 15 % des ZrSiO₄ zersetzt.

Setzt man dagegen als Ausgangspulver ZrSiO₄ in einem Anteil von 98 %, jedoch mit einer Feinkörnigkeit < 10 µ ein und fügt neben 1,5 % TiO₂ zusätzlich noch 0,5 % Phosphorverbindungen zu, so steigt die erzielbare Rohdichte auf etwa 4,35 g/cm³, verbunden mit einer wesentlichen Verbesserung der offenen Porosität auf etwa 0,5 %. Der Anteil an zersetztem ZrSiO₄ nach einstündigem Einsatz bei 1700°C ist bereits deutlich auf ca. 10 % erniedrigt.

Eine weitere Verbesserung erbringt ein niedriger Titandioxidgehalt. Werden beispielsweise 98,5 % ZrSiO₄ mit einer Feinheit < 10 µ mit nur 1 % TiO₂ und 0,5 % einer Phosphorverbindung als Ausgangsmaterial eingesetzt, sind Rohdichten bis zu 4,4 g/cm³ bei einer offenen Porosität von 0,2 % erzielbar. Die Zersetzung zu ZrSiO₄ nach einstündigem Einsatz bei 1700°C beträgt überraschenderweise nur etwa 5 %.

Wenn man den Anteil an feinkörnigem ZrSiO₄ weiter steigert und auf den Zusatz der Phosphorverbindung verzichtet, so ergeben sich deutlich ungünstigere Eigenschaften. Bei Verwendung von 99 % ZrSiO₄ < 10 µ in Verbindung mit 1 % TiO₂ ergibt sich ein Zirkonsilikatstein mit einer Rohdichte von 4,35 g/cm³, jedoch ist die offene Porosität auf 0,7 % angewachsen, und auch der Anteil des zersetzten ZrSiO₄ nach einstündigem Einsatz bei 1700°C ist auf ca. 10 % gestiegen. Man erkennt hieraus die grundlegende Bedeutung der Hinzufügung der Phosphorverbindung.

Bei vergleichsweise hohem Anteil von Phosphorverbindungen ergibt sich keine vergleichsweise Verbesserung der Eigenschaften, während die offene Porosität noch in einem relativ günstigen Bereich liegt. So kann ZrSiO₄ mit einer Feinheit < 10 µ mit 94 % Anteil mit 2 % TiO₂ und 4 % einer Phosphorverbindung eingesetzt werden. Es resultiert eine Rohdichte von 4,3 g/cm³ bei einer offenen Porosität von 0,7 %. Der Anteil an zersetztem ZrSiO₄ nach einstündigem Einsatz bei 1700°C beträgt etwa 8 %.

Ein besonders hoher Anteil an Titandioxid führt zwar zu einem besonders dichten Gefüge, jedoch wird die Dissoziation widerum nachteiliger. Bei Verwendung von ZrSiO₄ mit einer Feinheit < 10 µ und einem Anteil von 95 % in Verbindung mit 4 % TiO₂ und 1 % eines Gemisches aus Phosphorverbindungen ergibt sich am fertigen Zirkonsilikatstein eine Rohdichte von 4,41 g/cm³ bei einer offenen Porosität von 0,2 %. Der Anteil an zersetztem ZrSiO₄ nach einstündigem Einsatz bei 1700°C beträgt jedoch schon etwa 13 %.

Die Beispiele sind in folgender Tabelle zusammengefaßt:

| Beispiel | 1 | 2 | 3 | 4 | 5 | 6 |
|---|---|---|---|---|---|---|
| ZrSiO₄ < 40 µ % | 98,5 | - | - | - | - | - |
| ZrSiO₄ < 10 µ % | - | 98 | 98,5 | 99 | 94 | 95 |
| TiO₂ % | 1,5 | 1,5 | 1 | 1 | 2 | 4 |
| Phosphorverb. % | - | 0,5 | 0,5 | - | 4 | 1 |
| Rohdichte g/cm³ | 4,20 | 4,35 | 4,40 | 4,35 | 4,30 | 4,41 |
| O. Poren % | 2,3 | 0,5 | 0,2 | 0,7 | 0,7 | 0,2 |
| Anteil an % zersetztem ZrSiO₄ nach 1stündigem Einsatz bei 1700°C | ca. 15 | ca. 10 | ca. 5 | ca. 10 | 8 | 13 |

## Patentansprüche

1. Zirkonsilikatstein mit einer Rohdichte von zwischen 4,2 g/cm³ und 4,5 g/cm³ aus einem feinkörnigen ZrSiO₄-Ausgangspulver, das 62 Gew.-% bis 66 Gew.-% ZrO₂, 33 Gew.-% bis 34 Gew.-% SiO₂ und Verunreinigungen in Form von Al₂O₃, TiO₂ und Fe₂O₃ in möglichst geringen Anteilen enthält, dadurch gekennzeichnet, daß der Zirkonsilikatstein eine oder mehrere reaktionsfähigen Phosphor enthaltende Phosphorverbindungen in einer Menge zwischen 0,1 und 5 Gew.-% und als Verunreinigungen maximal 0,3 Gew.-% Al₂O₃, 0,2 Gew.-% TiO₂ und 0,1 Gew.-% Fe₂O₃ enthält.

2. Zirkonsilikatstein nach Anspruch 1, dadurch gekennzeichnet, daß er TiO₂ als Sinterhilfsmittel in einer Menge von maximal 5 Gew.-% - vorzugsweise maximal 1 Gew.-% - enthält.

3. Zirkonsilikatstein nach Anspruch 1 oder 2, dadurch gekennzeichnet, daß er als Phosphorverbindung Phosphorsaure, Salze und Ester der Phosphorsäure, Phosphonsäure (= Phosphorige Säure), Phosphite, Hydrogenphosphite, Phosphonsäureester, Hypophosphorige Säure (= Phosphinsäure), Salze und Ester der Hypophosphorigen Säure, Diphosphorsäure, Diphosphorige Säure, Salze der Diphosphorigen Säure, Polyphosphorsäuren, Metaphosphorsäure und/oder Salze der Metaphosphorsäure enthält.

4. Zirkonsilikatstein nach einem oder mehreren der Ansprüche 1 bis 3, dadurch gekennzeichnet, daß er eine offene Porosität < 0,5 % aufweist.

5. Verfahren zur Herstellung eines Zirkonsilikatsteines mit einer Rohdichte von zwischen 4,2 g/cm³ und 4,5 g/cm³ nach einem oder mehreren der Ansprüche 1 bis 4, in dem das feinkörnige Ausgangspulver geformt und gebrannt wird, dadurch gekennzeichnet, daß dem Ausgangspulver eine reaktionsfähigen Phosphor enthaltende Phosphorverbindung in einer Menge von 0,1 bis 5 Gew.-% hinzugefügt wird.

6. Verfahren zur Herstellung eines Zirkonsilikatsteines nach Anspruch 5, dadurch gekennzeichnet, daß dem feinkörnigen Ausgangspulver Titandioxid als Sinterhilfsmittel in einer Menge zwischen 0,1 bis 5 Gew.-% hinzugefügt wird.

7. Verfahren zur Herstellung eines Zirkonsilikatsteines nach den Ansprüchen 5 oder 6, dadurch gekennzeichnet, daß das Ausgangspulver auf eine Mahlfeinheit von maximal 20 µ, vorzugsweise maximal 10 µ, aufgemahlen wird.

8. Verfahren zur Herstellung eines Zirkonsilikatsteines nach Anspruch 6, dadurch gekennzeichnet, daß das TiO₂ in technischer Reinheit in Form eines Rutil-/oder Anataspigmentes eingesetzt wird.

9. Verfahren zur Herstellung eines Zirkonsilikatsteines nach einem oder mehreren der Ansprüche 5 bis 8, dadurch gekennzeichnet, daß ein feinkörniges Ausgangspulver aus 98 Gew.-% Zirkonsilikat, 1,5 Gew.-% Titandioxid und 0,5 Gew.-% einer Phosphorverbindung eingesetzt wird.

## Claims

1. A zirconium silicate brick, the brick being produced from a fine grained ZrSiO₄ starting powder in which ZrO₂ is present in the amount of 62 % to 66 %, and in which SiO₂ is present in the amount of 33 % to 34 %, each, based on the weight of the starting powder, having a raw density between 4,2 g/cm³ and 4,5 g/cm³ and containing as little as possible contaminations of Al₂O₃, TiO₂, and Fe₂O₃, **wherein** the zirconium silicate brick contains one or more phosphorus compounds in the amount of 0.1 % to 5 %, based on the weight of the starting powder, and comprises minimal amounts of contaminations in the amount of not more than 0,3 % Al₂O₃, not more than 0,2 % TiO₂, and not more than 0,1 % Fe₂O₃, each based on the weight of the starting powder.

2. The zirconium silicate brick of claim 1, **wherein** the brick further comprises TiO₂ added to the starting powder in an amount not greater than 5 % - preferably not greater than 1 % - based on the weight of the starting powder to aid in the sintering of the brick.

3. The zirconium silicate brick of claim 1 or 2, **wherein** said phosphorus compound is selected from at least one member of the group consisting of phosphoric acid, salts and esters of phosphoric acid, phosphoric acid (= phosphorous acid), phosphites, hydrogen phosphites, phosphoric acid ester, hydrophosphorous acid (= phosphinic acid), salts and esters of hydrophosphorous acid, diphosphoric acid, diphosphorous acid, salts of the diphosphorous acid, polyphosphoric acids, metaphosphoric acids, and salts of metaphosphoric acid.

4. The zirconium silicate brick of one or more of claims 1 to 3, **wherein** said brick has an open porosity of less than 0.5 %.

5. A method of producing a zirconium silicate brick of one or more of the claims 1 to 4, the brick having a raw density between 4,2 g/cm³ and 4,5 g/^{cm3,} whereby the fine grained starting powder is formed into the brick and the brick is baked, **wherein** a reactive phosphorus comprising phosphorus compound in the amount of 0.1 % to 5 % based on the weight of the starting powder is added to the starting powder.

6. The method of claim 6, **wherein** titanium dioxide in the amount of 0.1 % to 5 % based on the weight of the starting powder is added as a sinter-aiding means to the fine grained starting powder.

7. The method of claims 5 or 6, **wherein** the starting powder is ground to a grinding fineness not greater than 20 µm, preferably not greater than 10 µm.

8. The method of claim 7, **wherein** the TiO₂ of technical purity is used in form of a ruffle pigment or anatase-pigment.

9. The method of one or more of claims 5 to 8, **wherein** a fine grained starting powder consisting of 98 % zirconium silicate, 1.5 % titanium dioxide, and 0.5 % of a phosphorus compound, each, based on the weight of the starting powder, is used.

## Revendications

1. Pierre de silicate de zirconium d'une densité apparente comprise entre 4,2 g/cm³ et 4,5 g/cm³ faite d'une poudre initiale de ZrSio₄ à grains fins, qui contient de 62 à 66 % en poids de ZrO₂, de 33 à 34 % en poids de SiO₂ et des impuretés sous forme de Al₂O₃, TiO₂ et Fe₂O₃ dans des proportions aussi faibles que possible, caractérisée en ce que la pierre de silicate de zirconium contient un ou plusieurs composés de phosphore contenant du phosphore réactif dans une quantité comprise entre 0,1 et 5 % en poids et en tant qu'impuretés au maximum 0,3 % en poids de Al₂O₃, 0,2 % en poids de TiO₂ et 0,1 % en poids de Fe₂O₃.

2. Pierre de silicate de zirconium selon la revendication 1, caractérisée en ce qu'elle contient du TiO₂ en tant qu'agent auxiliaire de frittage dans une quantité de 5 % en poids au maximum - de préférence 1 % en poids au maximum -.

3. Pierre de silicate de zirconium selon la revendication 1 ou 2, caractérisée en ce qu'elle contient comme composé de phosphore, de l'acide phosphorique, des sels et l'ester de l'acide phosphorique, de l'acide phosphonique (= acide phosphoreux), des phosphites, des phosphites d'hydrogène, de l'ester d'acide phosphonique, de l'acide hypophosphoreux (= acide phosphinique), des sels et de l'ester de l'acide hypophosphoreux, de l'acide diphosphorique, de l'acide diphosphoreux, des sels de l'acide disphosphoreux, des acides polyphosphorique, de l'acide métaphosphorique et/ou des sels de l'acide métaphosphorique.

4. Pierre de silicate de zirconium selon une ou plusieurs des revendications 1 à 3, caractérisée en ce qu'elle présente une porosité ouverte < 0,5 %.

5. Procédé de fabrication d'une pierre de silicate de zirconium avec une densité apparente comprise entre 4,2 g/cm³ et 4,5 g/cm³ selon une ou plusieurs des revendications 1 a 4, dans lequel la poudre initiale à grains fins est formée et cuite, caractérisé en ce qu'il est ajouté à la poudre initiale un composé de phosphore contenant du phosphore réactif dans une quantité de 0,1 à 5 % en poids.

6. Procédé de fabrication d'une pierre de silicate de zirconium selon la revendication 5, caractérisé en ce qu'il est ajouté à la poudre initiale à grains fins du dioxyde de titane en tant qu'agent auxiliaire de frittage dans une quantité comprise entre 0,1 et 5 % en poids.

7. Procédé de fabrication d'une pierre de silicate de zirconium selon les revendications 5 ou 6, caractérisé en ce que la poudre initiale est broyée à une finesse de broyage de 20 µ au maximum, de préférence de 10 µ au maximum.

8. Procédé de fabrication d'une pierre de silicate de zirconium selon la revendication 6, caractérisé en ce que le TiO₂ est utilisé dans une pureté technique sous la forme d'un pigment de rutile ou d'un pigment d'anatase.

9. Procédé de fabrication d'une pierre de silicate de zirconium selon une ou plusieurs des revendications 5 à 8, caractérisé en ce qu'il est utilisé une poudre initiale à grains fins faite de 98 % en poids de silicate de zirconium, de 1,5 % en poids de dioxyde de titane et de 0,5 % en poids d'un composé de phosphore.
